# EUROPEAN PATENT APPLICATION

(11) **EP 4 280 415 A1**
(43) Date of publication of application: **22.11.2023**
(21) Application number: 22748977.0
(22) Date of filing: 26.01.2022
(51) Int. Cl.: H02J 7/00

(54) **CHARGING CONTROL METHOD AND APPARATUS, ELECTRONIC DEVICE, AND CHARGER**

(30) Priority: 04.02.2021 CN 202110157989
(71) Applicant: Vivo Mobile Communication Co., Ltd., Dongguan, Guangdong 523863 (CN)
(72) Inventor: GUO, Pengfei, Dongguan, Guangdong 523863 (CN)
(74) Representative: Murgitroyd & Company
(86) International application number: PCT/CN2022/073934
(87) International publication number: WO 2022/166698

(57) **Abstract**

This application discloses a charging control method and apparatus, an electronic device, and a charger. The method includes: transmitting a first instruction to a charger in a case that communication ports of a cable integrated circuit module are all configured to be in an Rx mode, the first instruction being used for indicating that the electronic device is about to communicate with the cable integrated circuit module, and the first instruction being further used for instructing the charger to disable a transmission function of a Tx port of the charger; and transmitting a second instruction to the charger in a case that the electronic device successfully communicated with the cable integrated circuit module, the second instruction being used for indicating that the electronic device has completed communication with the cable integrated circuit module.

## Description

### CROSS-REFERENCE TO RELATED APPLICATION

This application claims priority to Chinese Patent Application No. 202110157989.7 filed on February 4, 2021, which is incorporated herein by reference in its entirety.

### TECHNICAL FIELD

This application belongs to the field of communication technology and specifically relates to a charging control method and apparatus, an electronic device, and a charger.

### BACKGROUND

Currently, more and more electronic devices support fast charging, and electronic devices (e.g., mobile phones) may be implemented using a dual wire communication mode based on universal synchronous/asynchronous receiver/transmitter (Universal Synchronous/Asynchronous Receiver/Transmitter, USART). The dual wire communication mode based on USART is a fast charging mode based on a D+/D- dual wire communication protocol, and the dual wire communication mode based on USART has two different communication connection modes (i.e. the communication connection modes between an electronic device, a charger, and a cable integrated circuit module).

However, different mobile phones (e.g., mobile phones of different models) may use different communication connection modes for fast charging. For example, a mobile phone 1 uses a communication connection mode 1 and a mobile phone 2 uses a communication connection mode 2. Therefore, different mobile phones may not be able to share a same communication connection mode for fast charging. That is, the mobile phone 1 cannot use the communication connection mode 2 for fast charging, and the mobile phone 2 cannot use the communication connection mode 1 for fast charging, resulting in low flexibility in fast charging of different electronic devices.

### SUMMARY

An objective of embodiments of this application is to provide a charging control method and apparatus, an electronic device, and a charger for solving the problem of low flexibility in fast charging of different electronic devices.

To resolve the foregoing technical problem, this application is implemented as follows:
According to a first aspect, an embodiment of this application provides a charging control method, applied to an electronic device, the electronic device, a cable integrated circuit module, and a charger being connected to each other. The method includes the following steps: transmitting a first instruction to the charger in a case that communication ports of the cable integrated circuit module are all configured to be in a receive (Receive, Rx) mode, the first instruction being used for indicating that the electronic device is about to communicate with the cable integrated circuit module, and the first instruction being further used for instructing the charger to disable a transmission function of a transmit (Transmit, Tx) port of the charger; and transmitting a second instruction to the charger in a case that the electronic device successfully communicated with the cable integrated circuit module, the second instruction being used for indicating that the electronic device has completed communication with the cable integrated circuit module.

According to a second aspect, an embodiment of this application provides a charging control method, applied to a charger, the charger, an electronic device, and a cable integrated circuit module being connected to each other. The method includes the following steps: receiving a first instruction transmitted by the electronic device in a case that communication ports of the cable integrated circuit module are all configured to be in an Rx mode, the first instruction being used for indicating that the electronic device is about to communicate with the cable integrated circuit module; and disabling the transmission function of a Tx port of the charger based on the first instruction.

According to a third aspect, an embodiment of this application provides a charging control apparatus, applied to an electronic device, the electronic device, a cable integrated circuit module, and a charger being connected to each other. The charging control apparatus includes a transmission module, configured to transmit a first instruction to the charger in a case that communication ports of the cable integrated circuit module are all configured to be in an Rx mode, the first instruction being used for indicating that the electronic device is about to communicate with the cable integrated circuit module, and the first instruction being further used for instructing the charger to disable a transmission function of a Tx port of the charger; transmit a second instruction to the charger in a case that the electronic device successfully communicated with the cable integrated circuit module, the second instruction being used for indicating that the electronic device has completed communication with the cable integrated circuit module.

According to a fourth aspect, an embodiment of this application provides a charging control apparatus, applied to a charger, the charger, an electronic device, and a cable integrated circuit module being connected to each other. The charging control apparatus includes a receiving module and a disabling module, the receiving module being configured to receive a first instruction transmitted by the electronic device in a case that communication ports of the cable integrated circuit module are all configured to be in an Rx mode, the first instruction being used for indicating that the electronic device is about to communicate with the cable integrated circuit module; and the disabling module is configured to disable a transmission function of a Tx port of the charger based on the first instruction received by the receiving module.

According to a fifth aspect, an embodiment of this application provides an electronic device, including a processor, a memory, and a program or an instruction stored in the memory and executable on the processor, where when the program or the instructions is executed by the processor, the steps of the method according to the first aspect are implemented.

According to a sixth aspect, an embodiment of this application provides a charger, including a processor, a memory, and a program or an instruction stored in the memory and executable on the processor, where when the program or the instruction is executed by the processor, the steps of the method according to the second aspect are implemented.

According to a seventh aspect, an embodiment of this application provides a readable storage medium, in which a program or an instruction is stored, when the program or the instruction is executed by a processor, the steps of the method according to the first aspect, or the steps of the method according to the second aspect are implemented.

According to an eighth aspect, an embodiment of this application provides a chip, including a processor and a communication interface, the communication interface being coupled to the processor, and the processor being configured to run a program or instruction to implement the method according to the first aspect, or implement the method according to the second aspect.

In the embodiments of this application, the electronic device may transmit a first instruction to the charger to disable a transmission function of a Tx port of the charger in a case that communication ports of the cable integrated circuit module are all configured to be in an Rx mode, and then transmit a second instruction to the charger to indicate the charger that the electronic device has successfully communicated with the cable integrated circuit module in a case that the electronic device successfully communicated with the cable integrated circuit module. In this solution, the communication ports of the cable integrated circuit module may be all configured to be in an Rx mode in advance, that is, the configuration mode of the communication ports of the cable integrated circuit module is unified (i.e., D+/D- of the cable integrated circuit module are all in an Rx mode), so that different electronic devices may share the same communication connection mode for charging during fast charging, improving the flexibility in fast charging of different electronic devices. Moreover, in the configuration mode of this solution, the electronic device may instruct the charger to disable the transmission function of the Tx port of the charger, so that the electronic device may communicate with the cable integrated circuit module, and thus obtain subsequent cable information for charging from the cable integrated circuit module. After the electronic device successfully communicated with the cable integrated circuit module, the electronic device may indicate the charger that the electronic device has successfully communicated with the cable integrated circuit module, so that the electronic device may request the charger for charging through the cable integrated circuit module. Therefore, the electronic device requests the charger to output corresponding current/voltage through the cable integrated circuit module based on the cable information, thereby achieving charging for the electronic device while avoiding damage to the cable integrated circuit module caused by excessive current/voltage outputted by the charger, and ensuring the safety of the electronic device.

### BRIEF DESCRIPTION OF THE DRAWINGS

FIG. 1 is a first schematic diagram of a communication connection mode in the related art.
FIG. 2 is a second schematic diagram of a communication connection mode in the related art.
FIG. 3 is a schematic diagram of a communication connection mode provided in an embodiment of this application.
FIG. 4 is a first schematic flowchart of a charging control method provided in an embodiment of this application.
FIG. 5 is a second schematic flowchart of a charging control method provided in an embodiment of this application.
FIG. 6 is a third schematic flowchart of a charging control method provided in an embodiment of this application.
FIG. 7 is a fourth schematic flowchart of a charging control method provided in an embodiment of this application.
FIG. 8 is a first schematic structural diagram of a charging control apparatus provided in an embodiment of this application.
FIG. 9 is a second schematic structural diagram of a charging control apparatus provided in an embodiment of this application.
FIG. 10 is a third schematic structural diagram of a charging control apparatus provided in an embodiment of this application.
FIG. 11 is a schematic diagram of the hardware structure of an electronic device or a charger provided in an embodiment of this application.
FIG. 12 is a schematic diagram of the hardware structure of an electronic device provided in an embodiment of this application.

### DETAILED DESCRIPTION

The technical solutions in the embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

The terms, e.g., "first" and "second" in the specification and claims of this application are used for distinguishing similar objects, rather than describing a specific sequence or order. It is to be understood that data used in such a manner is exchangeable in a proper case, so that the embodiments of this application can be implemented in a sequence different from those illustrated or described herein. The objects distinguished by "first", "second", etc. are usually of the same class and are not limited in number. For example, the first object may be one or multiple in number. In addition, "and/or" used in the specification and claims represents at least one of the connected objects. The character "/" generally means that the associated objects before and after it are in an "or" relationship.

The following is a detailed description of a charging control method provided in this embodiment of this application through specific embodiments and their application scenarios combined with the accompanying drawings.

The fast charging mode is achieved by increasing the charging power by two methods: one is increasing the output voltage, e.g., a QC protocol (high voltage, low current), and the other is increasing the output current, e.g., a VOOC protocol (low voltage, high current). Usually, to achieve fast charging, electronic devices may use D+/D- dual wire communication protocols (e.g., the QC protocol and the VOOC protocol) to achieve fast charging. Fast charging modes based on D+/D- dual wire communication protocols include USART, I2C, and the like.

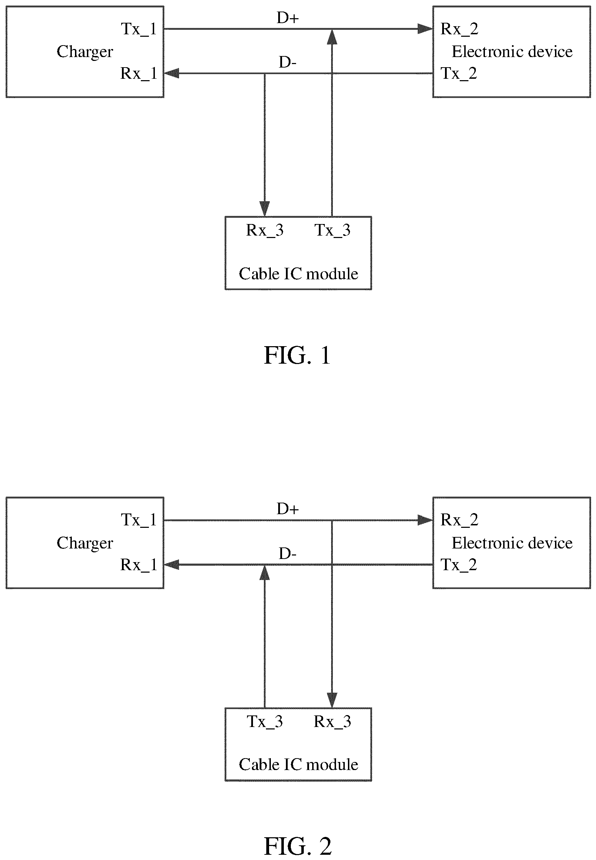

In the dual wire communication modes based on USART, there are two communication connection modes between an electronic device, a charger, and a cable integrated circuit (Integrated Circuit, IC) module. One communication connection mode is shown in FIG. 1, where a Tx port (e.g., Tx_1) of a charger (or adapter) is connected to an Rx port (e.g., Rx_2) of an electronic device, an Rx port (e.g., Rx_1) of the charger is connected to a Tx port (e.g., Tx_2) of the electronic device, a Tx port (e.g., Tx_3) of a cable IC module is connected to the Rx port of the electronic device, and an Rx port (e.g., Rx_3) of the cable IC module is connected to the Tx port of the electronic device. In this mode, D- of the cable IC module is an Rx port (i.e., configured to be in an Rx mode), and D+ of the cable IC module is a Tx port (i.e., configured to be in a Tx mode).

The other communication connection mode is shown in FIG. 2, where a Tx port (e.g., Tx_1) of a charger is connected to an Rx port (e.g., Rx_2) of an electronic device, an Rx port (e.g., Rx_1) of the charger is connected to a Tx port (e.g., Tx_2) of the electronic device, a Tx port (e.g., Tx_3) of a cable IC module is connected to the Rx port of the charger, and an Rx port (e.g., Rx_3) of the cable IC module is connected to the Tx port of the charger. In this mode, D- of the cable IC module is a Tx port (i.e., configured to be in a Tx mode), and D+ of the cable IC module is an Rx port (i.e., configured to be in an Rx mode).

It can be seen that in the foregoing two communication connection modes, the configuration modes of the D+/D- of the cable IC modules are different, and different electronic devices (e.g., different models of electronic devices) use different communication connection modes for fast charging. That is, different electronic devices cannot share the same communication connection mode for fast charging, resulting in low flexibility in fast charging of electronic devices.

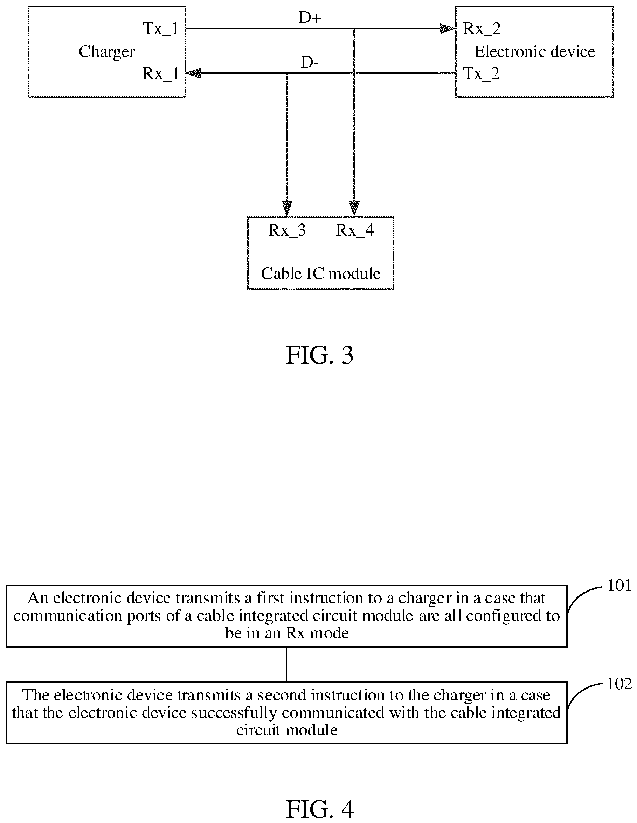

To solve the above technical problem, the embodiments of this application provide a new communication connection mode. As shown in FIG. 3, communication ports of a cable IC module are all configured to be in an Rx mode (i.e., the communication ports of the cable IC module are all Rx ports, e.g., Rx_3 and Rx_4), such that D- of the cable IC module is an Rx port (i.e., configured to be in an Rx mode), and D+ of the cable IC module is also an Rx port (i.e., configured to be in an Rx mode). Based on this configuration mode (where the D+ and D- of the cable IC module are both in an Rx mode), before communicating with the cable IC module, an electronic device may communicate with a charger to inform the charger that the electronic device needs to communicate with the cable IC module, so that the charger disables a transmission function of a Tx port thereof to avoid both the charger and the electronic device transmitting information to the cable IC module at the same time. Then, in a case that the charger disables the transmission function of the Tx port thereof, the electronic device may communicate with the cable IC module to obtain cable information of the cable IC module (e.g., the maximum voltage that the cable IC module can carry, and the maximum current transmitted). After completing communication with the cable IC module, the electronic device continues to communicate with the charger, so that the charger restores the transmission function at the Tx port thereof. Thus, the electronic device may transmit a request instruction to the charger through the cable IC module based on the cable information to request the charger to output the corresponding current/voltage (e.g., current within the maximum current range, and voltage within the maximum voltage range), thereby achieving charging for the electronic device while avoiding damage to the cable IC module caused by excessive current/voltage outputted by the charger. In addition, since the D+/D- of the cable IC module are both in an Rx mode, that is, the D+/D- of the cable IC module are unified, different electronic devices may share the same communication connection mode (i.e., the communication connection mode of this solution) for charging during fast charging, improving the flexibility in fast charging of different electronic devices.

The embodiments of this application are based on a charging system including the electronic device and the charger as an example. Other charging systems, e.g., a third-party communication system based on USART, may also be applied in the embodiments of this application, which may be specifically determined based on actual usage needs and is not limited in the embodiments of this application.

The embodiments of this application provide a charging control method. FIG. 4 shows a flowchart of the charging control method provided in the embodiments of this application, and the method may be applied to an electronic device. As shown in FIG. 4, the charging control method provided in the embodiments of this application may include step 101 and step 102 as follows.

Step 101: An electronic device transmits a first instruction to a charger in a case that communication ports of a cable integrated circuit module are all configured to be in an Rx mode.

In the embodiments of this application, the electronic device, the cable integrated circuit module and the charger are connected to each other. The first instruction is used for indicating that the electronic device is about to communicate with the cable integrated circuit module, and the first instruction is further used for instructing the charger to disable a transmission function of a Tx port of the charger.

The first instruction being used for indicating that the electronic device is about to communicate with the cable integrated circuit module may be understood as: the electronic device indicates/informs the charger through the first instruction that the electronic device is about to communicate with the cable integrated circuit module. The disabling a transmission function of a Tx port of the charger may be understood as: the Tx port of the charger is configured to be in a high impedance mode to prohibit the Tx port of the charger from transmitting messages.

It can be understood that, for a charging system including the electronic device, the cable integrated circuit module and the charger, the communication ports (i.e., D- and D+) of the cable integrated circuit module may be all configured to be in an Rx mode (i.e., the communication ports of the cable integrated circuit module are all Rx ports) in advance, so that the D- and D+ of the cable integrated circuit module are both Rx ports (i.e., both configured to be in an Rx mode) Further, the electronic device transmits a first instruction to the charger based on the configured mode to indicate the charger that the electronic device is about to communicate with the cable integrated circuit module. The charger configures a Tx port thereof to be in a high impedance mode based on the first instruction, to prohibit the Tx port from transmitting messages, and facilitate communication between the electronic device and the cable integrated circuit module. A reference may be made to related description in FIG. 3 in the foregoing embodiment for the communication connection mode of the electronic device, the cable integrated circuit module and the charger, which will not be described in detail herein.

The communication ports of the cable integrated circuit module being all configured to be in an Rx mode may be understood as: data bits (i.e., data bits in a data register) corresponding to Tx pins in the cable integrated circuit module are adjusted to make the data bits corresponding to the Tx pins be the same as data bits corresponding to Rx pins in the cable integrated circuit module, so that the configuration of the D+/D- of the cable integrated circuit module are adjusted from a Tx mode to an Rx mode.

Optionally, in the embodiments of this application, the communication connection mode between the electronic device, the cable integrated circuit module, and the charger may be wired or wireless, which may be determined based on actual usage needs and is not limited in the embodiments of this application.

Step 102: The electronic device transmits a second instruction to the charger in a case that the electronic device successfully communicated with the cable integrated circuit module.

In the embodiments of this application, the second instruction is used for indicating that the electronic device has completed communication with the cable integrated circuit module, and the second instruction is further used for instructing the charger to restore the transmission function of the Tx port of the charger.

The electronic device successfully communicating with the cable integrated circuit module may be understood as: the electronic device successfully obtains cable information from the cable integrated circuit module, and the cable information is used by the electronic device to request a current/voltage that matches the cable information from the charger, thereby achieving charging for the electronic device.

Optionally, in the embodiments of this application, the cable information may include at least one of the following: the maximum current that the cable integrated circuit module can transmit, the maximum voltage that the cable integrated circuit module can carry, the impedance of the cable integrated circuit module, the manufacturer information of the cable integrated circuit module, and the like. The current/voltage that matches the cable information may be understood as: current lower than or equal to the maximum current, and voltage lower than or equal to the maximum voltage.

Optionally, in the embodiments of this application, before step 102, the charging control method provided in the embodiments of this application further includes step 103, and step 102 may be specifically achieved by step 102a as follows.

Step 103: The electronic device transmits a fifth instruction to the cable integrated circuit module.

In the embodiments of this application, the fifth instruction is used for requesting cable information from the cable integrated circuit module.

Step 102a: The electronic device transmits a second instruction to the charger upon successful reception of the cable information transmitted by the cable integrated circuit module.

In the embodiments of this application, after transmitting the first instruction to the charger to disable the transmission function of the Tx port thereof, the electronic device may obtain the cable information from the cable integrated circuit module by transmitting the fifth instruction to the cable integrated circuit module, and then the electronic device transmits the second instruction to the charger to indicate the charger that the electronic device has successfully obtained the cable information, so that the charger restores the transmission function of the Tx port thereof. Therefore, the electronic device may transmit a request instruction to the charger through the cable integrated circuit module and request the charger to output corresponding current/voltage based on the cable information, thereby achieving charging for the electronic device while avoiding damage to the cable integrated circuit module caused by excessive current/voltage outputted by the charger, and ensuring the safety of the electronic device.

After the electronic device transmits the second instruction to the charger, depending on whether the charger receives the second instruction or not, the charger restores the transmission function of the Tx port of the charger in different ways, which will be specifically described below in two implementations.

Optionally, in the first implementation of the embodiments of this application, the charger restores/enables the transmission function of the Tx port of the charger in a case that the charger has received the second instruction.

In this implementation, after receiving the second instruction, the charger may learn that the electronic device has completed communication with the cable integrated circuit module, and the charger may promptly restore the transmission function of the Tx port thereof to ensure communication between the charger and the cable integrated circuit module. This enables the electronic device to request the corresponding current/voltage from the charger through the cable integrated circuit module, thereby achieving fast charging for the electronic device.

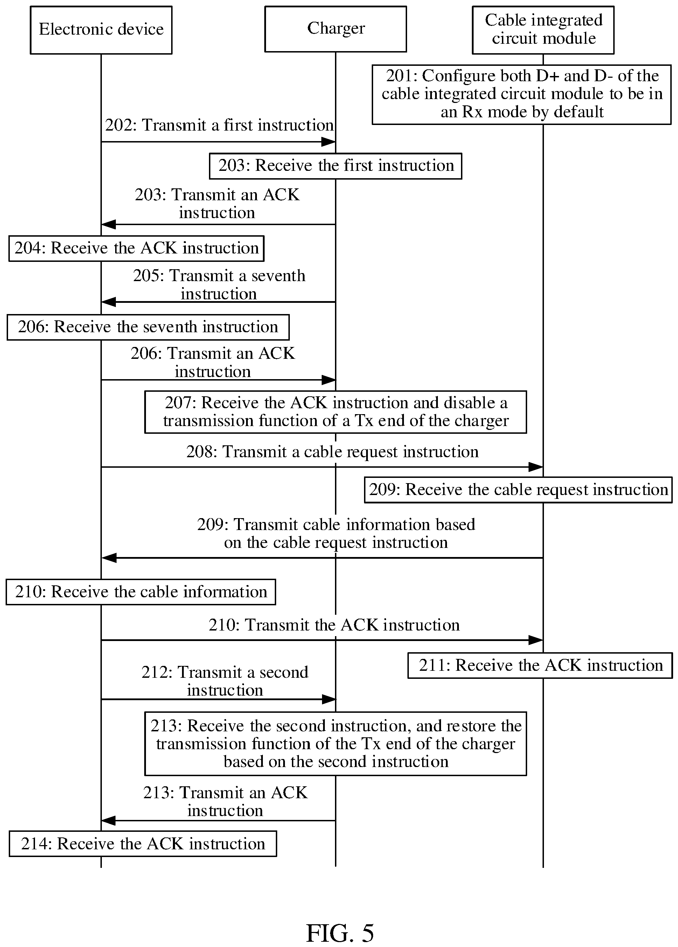

A specific interaction process involved in the charging control method provided in the embodiments of this application is described below. FIG. 5 shows an interaction flowchart of an electronic device, a cable integrated circuit module, and a charger in the embodiments of this application. Specifically, the charging control method provided in the embodiments of this application may include step 201 to step 214 as follows.

Step 201: By default, the cable integrated circuit module configures both D+ and D- of the cable integrated circuit module in an Rx mode.

It may be understood that in a case that D+ of the cable integrated circuit module is in an Rx mode and D- is in a Tx mode, the cable integrated circuit module may configure the D- to be in an Rx mode, so that both the D+ and D- of the cable integrated circuit module are in an Rx mode; and in a case that D+ of the cable integrated circuit module is in a Tx mode and D- is in an Rx mode, the cable integrated circuit module may configure the D+ to be in an Rx mode, so that both the D+ and D- of the cable integrated circuit module are in an Rx mode.

Step 202: The electronic device transmits a first instruction to the charger.

Step 203: The charger receives the first instruction transmitted by the electronic device and transmits an acknowledgment (Acknowledgment, ACK) instruction to the electronic device.

The ACK instruction is used for indicating that the charger has received the first instruction.

Step 204: The electronic device receives the ACK instruction.

Step 205: The charger transmits a seventh instruction to the electronic device.

The seventh instruction is used for indicating that the charger allows/agrees the electronic device to communicate with the cable integrated circuit module.

Step 206: The electronic device receives the seventh instruction transmitted by the charger and then transmits an ACK instruction to the charger.

The ACK instruction is used for indicating that the electronic device has received the seventh instruction.

Step 207: The charger receives the ACK instruction transmitted by the electronic device and then disables a transmission function of the Tx port of the charger.

Step 208: The electronic device transmits a cable request instruction to the cable integrated circuit module.

The cable request instruction (i.e., the fifth instruction described in the foregoing embodiment) is used for requesting cable information from the cable integrated circuit module.

As to the performance sequence, step 207 and step 208 may be performed simultaneously. Alternatively, step 207 may be performed first, and after the transmission function of the Tx port of the charger is disabled, the charger transmits indication information to the electronic device to indicate the electronic device that the charger has disabled the transmission function of the Tx port thereof. Then, after receiving the indication information, the electronic device performs step 208.

Step 209: The cable integrated circuit module receives the cable request instruction transmitted by the electronic device and transmits the cable information to the electronic device based on the cable request instruction.

Optionally, in the embodiments of this application, after receiving an instruction, the cable integrated circuit module may recognize whether the instruction corresponding to a message is transmitted by the electronic device or the charger based on certain bits (bit) or a certain byte (byte) in the frame header of the message in the instruction. In a case that the cable integrated circuit module receives two frames of messages simultaneously, the cable integrated circuit module first processes the message transmitted by the electronic device. In a case that the communication between the cable integrated circuit module and the electronic device is not supported, the cable integrated circuit module responds to the message from the charger.

Step 210: The electronic device receives the cable information transmitted by the cable integrated circuit module, and transmits an ACK instruction to the cable integrated circuit module.

The ACK instruction is used for indicating that the electronic device has received the cable information from the cable integrated circuit module.

Step 211: The cable integrated circuit module receives the ACK instruction from the electronic device.

Step 212: The electronic device transmits a second instruction to the charger.

Step 213: The charger receives the second instruction transmitted by the electronic device, restores the transmission function of the Tx port of the charger based on the second instruction, and then transmits an ACK instruction to the electronic device.

The ACK instruction is used for indicating that the charger has received the second instruction.

Step 214: The electronic device receives the ACK instruction transmitted by the charger.

A reference may be made to relevant descriptions in step 101 and step 102 of the foregoing embodiment for the specific descriptions in step 201 to step 214, which will not be described in detail herein.

Optionally, in the second implementation of the embodiments of this application, a pin of the Tx port and a pin of the Rx port of the charger are set in a linkage mode, and the first instruction is further used for instructing the charger to disable the reception function of an Rx port of the charger and activating a timer function of the charger.

The linkage setting may be understood as: in a case that one port of the charger is configured to be in a high impedance mode, the other port of the charger is further configured to be in a high impedance mode. For example, in a case that the Tx port of the charger is configured to be in a high impedance mode, the Rx port is further configured to be in a high impedance mode.

In this implementation, after receiving the first instruction, the charger may learn that the electronic device is about to communicate with the cable integrated circuit module. Then, the charger may configure the Tx and Rx ports thereof to be in a high impedance mode to prohibit the Tx port from transmitting messages and the Rx port from receiving messages, thereby facilitating communication between the charger and the cable integrated circuit module.

Optionally, in the embodiments of this application, the charger restores the transmission function of the Tx port and the reception function of the Rx port of the charger after the timer function is activated for a first preset duration.

It may be understood that in this implementation, regardless of whether the charger receives the second instruction transmitted by the electronic device (i.e., in a case that the charger has received or not received the second instruction), the charger may directly restore the transmission function of the Tx port and the reception function of the Rx port thereof after the first preset duration, to ensure communication between the charger and the cable integrated circuit module. This enables the electronic device to request the corresponding current/voltage from the charger through the cable integrated circuit module, thereby achieving fast charging for the electronic device.

Optionally, in the embodiments of this application, after step 102, the charging control method provided in the embodiments of this application further includes step 104 as follows.

Step 104: The electronic device transmits a control instruction to the charger after a second preset duration in a case that it is detected that the charger still has not received the second instruction after the first preset duration.

In the embodiments of this application, the control instruction is used for instructing the charger to communicate with the cable integrated circuit module.

It may be understood that after the transmission function of the Tx port and the reception function of the Rx port of the charger are restored, the electronic device may detect the charger in real time to determine whether the charger receives the second instruction. In a case that the charger still has not received the second instruction after the first preset duration, the electronic device may delay for the second preset duration on the basis of the first preset duration, that is, after the timer function is activated for a certain duration (i.e., the sum of the first preset duration and the second preset duration), the charger is controlled to request communication with the cable integrated circuit module through the control instruction.

Optionally, in the embodiments of this application, in a case that the charger still has not received the second instruction after the timer function is activated for the first preset duration, the charger requests communication with the cable integrated circuit module after the second preset duration.

It may be understood that in a case that the charger has not received the second instruction, after the first preset duration, the charger restores the transmission function of the Tx port and the reception function of the Rx port of the charger, and whether the charger receives the second instruction is determined. Thus, in a case that it is determined that the charger has not received the second instruction, the charger may delay for the second preset duration on the basis of the first preset duration, that is, after the timer function is activated for a certain duration (i.e., the sum of the first preset duration and the second preset duration), the charger requests communication with the cable integrated circuit module.

Optionally, in the embodiments of this application, the charger may communicate with the cable integrated circuit module through instruction interaction with the electronic device. After step 102, the charging control method provided in the embodiments of this application may further include step 301 to step 303 as follows.

Step 301: The electronic device receives a third instruction transmitted by the charger.

In the embodiments of this application, the third instruction is used for indicating that the charger is about to communicate with the cable integrated circuit module.

The third instruction being used for indicating that the charger is about to communicate with the cable integrated circuit module may be understood as: the charger indicates/informs the electronic device through the third instruction that the charger is about to communicate with the cable integrated circuit module.

Step 302: The electronic device disables the transmission function of a Tx port of the electronic device based on the third instruction.

The disabling the transmission function of the Tx port of the electronic device may be understood as: the Tx port of the electronic device is configured to be in a high impedance mode to prohibit the Tx port of the electronic device from transmitting messages.

It may be understood that in a case that the charger still has not received the second instruction, the charger may transmit the third instruction to the electronic device to indicate the electronic device that the charger is about to communicate with the cable integrated circuit module. This enables the electronic device to configure the Tx port thereof to be in a high impedance mode based on the third instruction to prohibit the Tx port from transmitting messages, thereby facilitating communication between the charger and the cable integrated circuit module.

Step 303: The electronic device restores the transmission function of the Tx port of the electronic device upon reception of a fourth instruction transmitted by the charger.

In the embodiments of this application, the fourth instruction is used for indicating that the charger has completed communication with the cable integrated circuit module.

It may be understood that after completing communication with the cable integrated circuit module, the charger may transmit the fourth instruction to the electronic device to indicate the electronic device that the charger has completed communication with the cable integrated circuit module, so that the electronic device restores the transmission function of the Tx port thereof. That is, before communicating with the cable integrated circuit module, the charger transmits an instruction (i.e., the third instruction) to the electronic device to disable the transmission function of the Tx port thereof, and after completing communication with the cable integrated circuit module, the charger transmits an instruction (i.e., the fourth instruction) to the electronic device to enable/restore the transmission function of the Tx port thereof.

The charger completing communication with the cable integrated circuit module may be understood as: the charger has completed re-identification of the cable integrated circuit module to determine from the cable integrated circuit module whether the electronic device has successfully communicated with the cable integrated circuit module.

In the embodiments of this application, in a case that the charger still has not received the second instruction, the charger cannot learn from the electronic device whether the electronic device has successfully communicated with the cable integrated circuit module (i.e., whether the cable information has been successfully obtained). Therefore, the charger can re-identify the cable integrated circuit module through instruction interaction with the electronic device, thereby effectively learning from the cable integrated circuit module whether the electronic device has successfully communicated with the cable integrated circuit module.

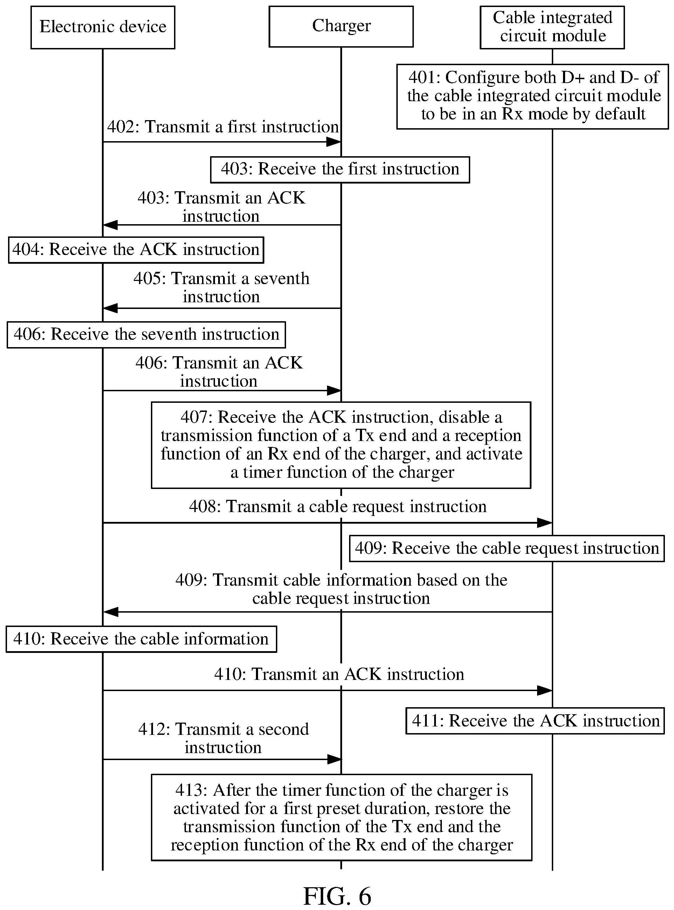

Another specific interaction process involved in the charging control method provided in the embodiments of this application is described below. FIG. 6 shows another interaction flowchart of an electronic device, a cable integrated circuit module, and a charger in the embodiments of this application. Specifically, the charging control method provided in the embodiments of this application may include step 401 to step 413 as follows.

Step 401: By default, the cable integrated circuit module configures both D+ and D- of the cable integrated circuit module in an Rx mode.

Step 402: The electronic device transmits a first instruction to the charger.

Step 403: The charger receives the first instruction transmitted by the electronic device and transmits an ACK instruction to the electronic device.

Step 404: The electronic device receives the ACK instruction.

Step 405: The charger transmits a seventh instruction to the electronic device.

Step 406: The electronic device receives the seventh instruction transmitted by the charger and transmits an ACK instruction to the charger.

Step 407: The charger receives the ACK instruction transmitted by the electronic device, disables the transmission function of a Tx port and the reception function of an Rx port of the charger, and activates a timer function of the charger.

Step 408: The electronic device transmits a cable request instruction to the cable integrated circuit module.

As to the performance sequence, step 407 and step 408 may be performed simultaneously. Alternatively, step 407 may be performed first, and after the transmission function of the Tx port and the reception function of the Rx port of the charger are disabled, the charger transmits indication information to the electronic device to indicate the electronic device that the charger has disabled the transmission function of the Tx port and the reception function of the Rx port thereof. Then, after receiving the indication information, the electronic device performs step 408.

Step 409: The cable integrated circuit module receives the cable request instruction transmitted by the electronic device and transmits the cable information to the electronic device based on the cable request instruction.

Step 410: The electronic device receives the cable information transmitted by the cable integrated circuit module, and transmits an ACK instruction to the cable integrated circuit module.

Step 411: The cable integrated circuit module receives the ACK instruction from the electronic device.

Step 412: The electronic device transmits a second instruction to the charger.

Step 413: After the timer function of the charger is activated for a first preset duration, the charger restores the transmission function of the Tx port and the reception function of the Rx port of the charger.

In the embodiments of this application, the charger may determine that the electronic device has completed communication with the cable integrated circuit module upon reception of the second instruction. In a case that the charger has not received the second instruction, the charger may delay for a second preset duration and restore the communication function between the electronic device and the charger after the second preset duration, thereby requesting communication with the cable integrated circuit module through instruction interaction with the electronic device.

A reference may be made to relevant descriptions in step 101, step 102, and step 301 to step 303 of the foregoing embodiments for the specific descriptions in step 401 to step 413, which will not be described in detail herein.

In the charging control method provided in the embodiments of this application, in a case that the communication ports of the cable integrated circuit module are configured to be in an Rx mode, the electronic device may transmit a first instruction to the charger, so that the charger disables the transmission function of the Tx port of the charger. Then, in a case that the electronic device successfully communicated with the cable integrated circuit module, the electronic device transmits a second instruction to the charger to indicate the charger that the electronic device has successfully communicated with the cable integrated circuit module. In this solution, the communication ports of the cable integrated circuit module may be all configured to be in an Rx mode in advance, that is, the configuration mode of the communication ports of the cable integrated circuit module is unified (i.e., D+/D- of the cable integrated circuit module are all in an Rx mode), so that different electronic devices may share the same communication connection mode for charging during fast charging, improving the flexibility in fast charging of different electronic devices. Moreover, in the configuration mode of this solution, the electronic device may instruct the charger to disable the transmission function of a Tx port of the charger, so that the electronic device may communicate with the cable integrated circuit module, and thus obtain subsequent cable information for charging from the cable integrated circuit module. After the electronic device successfully communicated with the cable integrated circuit module, the electronic device may indicate the charger that the electronic device has successfully communicated with the cable integrated circuit module, so that the electronic device may request the charger for charging through the cable integrated circuit module. Therefore, the electronic device requests the charger to output corresponding current/voltage through the cable integrated circuit module based on the cable information, thereby achieving charging for the electronic device while avoiding damage to the cable integrated circuit module caused by excessive current/voltage outputted by the charger, and ensuring the safety of the electronic device.

Optionally, in the embodiments of this application, in a case that the electronic device fails to communicate with the cable integrated circuit module, the electronic device may obtain the cable information from the cable integrated circuit module through the charger. Step 102 may be replaced with step 102b and step 102c as follows.

Step 102b: The electronic device transmits a sixth instruction to the charger in a case that the electronic device fails to communicate with the cable integrated circuit module.

In the embodiments of this application, the sixth instruction is used for indicating that the electronic device fails to communicate with the cable integrated circuit module, and the sixth instruction is further used for instructing the charger to restore the transmission function of the Tx port of the charger and communicate with the cable integrated circuit module.

Step 102c: The electronic device receives the cable information transmitted by the charger.

In the embodiments of this application, the cable information is the cable information from the cable integrated circuit module obtained by the charger during communication with the cable integrated circuit module.

It may be understood that in a case that the electronic device fails to communicate with the cable integrated circuit module, the electronic device may instruct the charger to restore the transmission function of the Tx port thereof, so that the charger can communicate with the cable integrated circuit module to obtain cable information from the cable integrated circuit module. Thus, the charger successfully obtains the cable information from the cable integrated circuit module, and transmits the cable information to the electronic device. Further, the electronic device may transmit a request instruction to the charger through the cable integrated circuit module and request the charger to output corresponding current/voltage based on the cable information, thereby achieving charging for the electronic device while avoiding damage to the cable integrated circuit module caused by excessive current/voltage outputted by the charger, and ensuring the safety of the electronic device.

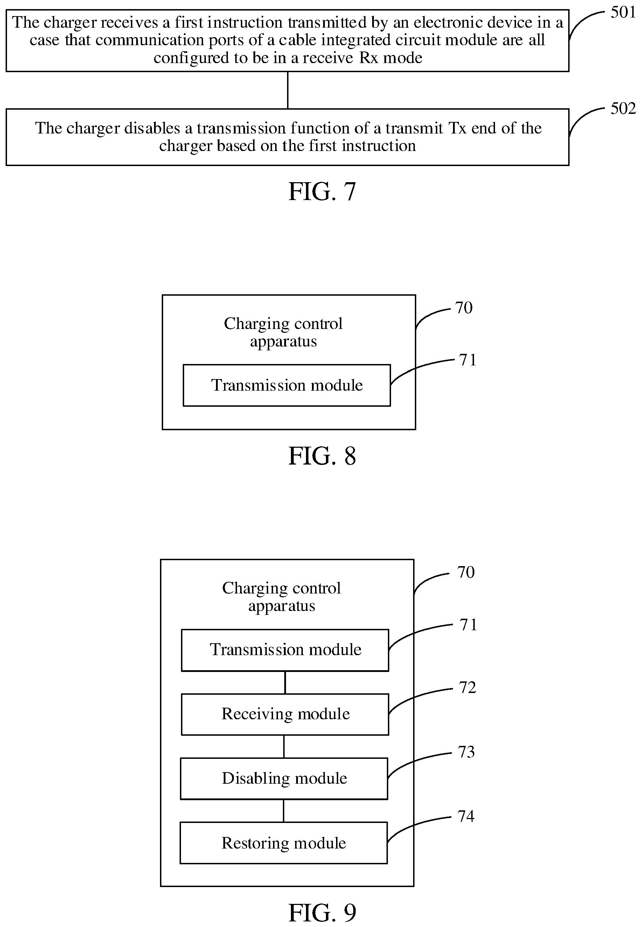

The embodiments of this application provide a charging control method. FIG. 7 shows a flowchart of the charging control method provided in the embodiments of this application, and the method may be applied to a charger. As shown in FIG. 7, the charging control method provided in the embodiments of this application may include steps 501 and 502 as follows.

Step 501: The charger receives a first instruction transmitted by an electronic device in a case that communication ports of a cable integrated circuit module are all configured to be in a receive Rx mode.

In the embodiments of this application, the charger, the electronic device, and the cable integrated circuit module are connected to each other. The first instruction is used for indicating that the electronic device is about to communicate with the cable integrated circuit module.

Step 502: The charger disables the transmission function of a transmit Tx port of the charger based on the first instruction.

In the charging control method provided in the embodiments of this application, the communication ports of the cable integrated circuit module may be all configured to be in an Rx mode in advance, that is, the configuration mode of the communication ports of the cable integrated circuit module is unified (i.e., D+/D- of the cable integrated circuit module are all in an Rx mode), so that different electronic devices may share the same communication connection mode for charging during fast charging, improving the flexibility of in fast charging different electronic devices. Moreover, in the configuration mode of this solution, the charger may disable the transmission function of the Tx port of the charger based on the instruction of the electronic device, so that the electronic device may communicate with the cable integrated circuit module, and thus obtain subsequent cable information for charging from the cable integrated circuit module.

Optionally, in the embodiments of this application, after step 502, the charging control method provided in the embodiments of this application further includes step 503 as follows.

Step 503: The charger restores the transmission function of the Tx port of the charger upon reception of the second instruction transmitted by the electronic device.

In the embodiments of this application, the second instruction is used for indicating that the electronic device has completed communication with the cable integrated circuit module.

Optionally, in the embodiments of this application, the pin of the Tx port and the pin of the Rx port of the charger are set in a linkage mode. After step 502, the charging control method provided in the embodiments of this application may further include step 504 and step 505 as follows.

Step 504: The charger disables the reception function of an Rx port of the charger and activates a timer function of the charger based on the first instruction.

Step 505: The charger restores the transmission function of the Tx port and the reception function of the Rx port of the charger after the timer function is activated for a first preset duration.

The charger may further perform step 502 and step 504 simultaneously, that is, the charger may disable the transmission function of the Tx port of the charger and the reception function of the Rx port of the charger simultaneously.

Optionally, in the embodiments of this application, after step 505, the charging control method provided in the embodiments of this application further includes step 506 or step 507 as follows.

Step 506: The charger requests to communicate with the cable integrated circuit module upon reception of the control instruction transmitted by the electronic device.

Step 507: The charger requests to communicate with the cable integrated circuit module after a second preset duration in a case that it is detected that the charger still has not received the second instruction after the first preset duration.

Optionally, in the embodiments of this application, after step 502, the charging control method provided in the embodiments of this application further includes step 508 and step 509 as follows.

Step 508: The charger transmits a third instruction to the electronic device in a case that the transmission function of the Tx port of the charger is restored.

In the embodiments of this application, the third instruction is used for indicating that the charger is about to communicate with the cable integrated circuit module, and the third instruction further is used for instructing the electronic device to disable the transmission function of the Tx port of the electronic device.

Step 509: The charger transmits a fourth instruction to the electronic device.

In the embodiments of this application, the fourth instruction is used for indicating that the charger has completed communication with the cable integrated circuit module, and the fourth instruction is further used for instructing the electronic device to restore the transmission function of the Tx port of the electronic device.

A reference may be made to the description in the foregoing embodiments for the relevant content in step 501 to step 509, which will not be described in detail herein.

The charging control method provided in the embodiments of this application may be performed by a charging control apparatus, or a control module for performing the charging control method in the charging control apparatus. In the embodiments of this application, a charging control apparatus performing the charging control method is used as an example for describing a charging control apparatus provided in the embodiments of this application.

FIG. 8 shows a possible structural schematic diagram of the charging control apparatus involved in the embodiments of this application. The charging control apparatus is applied to an electronic device, where the electronic device, a cable integrated circuit module, and a charger are connected to each other. As shown in FIG. 8, the charging control apparatus 70 may include a transmission module 71.

The transmission module 71 is configured to transmit a first instruction to the charger in a case that communication ports of the cable integrated circuit module are all configured to be in an Rx mode, where the first instruction is used for indicating that the electronic device is about to communicate with the cable integrated circuit module, and the first instruction is further used for instructing the charger to disable the transmission function of a Tx port of the charger; and transmit a second instruction to the charger in a case that the electronic device successfully communicated with the cable integrated circuit module, where the second instruction is used for indicating that the electronic device has completed communication with the cable integrated circuit module.

In a possible implementation, the charger restores the transmission function of the Tx port of the charger in a case that the charger has received the second instruction.

In a possible implementation, the pin of the Tx port and the pin of the Rx port of the charger are set in a linkage mode, and the first instruction is further used for instructing the charger to disable the reception function of an Rx port of the charger and activating a timer function of the charger.

In a possible implementation, the charger restores the transmission function of the Tx port and the reception function of the Rx port of the charger after the timer function is activated for a first preset duration.

In a possible implementation, the transmission module 71 is further configured to transmit, after the second instruction is transmitted to the charger and it is detected that the charger still has not received the second instruction after the first preset duration, a control instruction to the charger after a second preset duration, where the control instruction is used for instructing the charger to communicate with the cable integrated circuit module.

In a possible implementation, combined with FIG. 8, as shown in FIG. 9, the charging control apparatus provided in the embodiments of this application further includes a receiving module 72, a disabling module 73, and a restoring module 74. The receiving module 72 is configured to receive a third instruction transmitted by the charger after the transmission module 71 transmits the second instruction to the charger, where the third instruction is used for indicating that the charger is about to communicate with the cable integrated circuit module. The disabling module 73 is configured to disable the transmission function of the Tx port of the electronic device based on the third instruction received by the receiving module 72. The restoring module 74 is configured to restore the transmission function of the Tx port of the electronic device upon reception of a fourth instruction transmitted by the charger, where the fourth instruction is used for indicating that the charger has completed communication with the cable integrated circuit module.

In a possible implementation, the transmission module 71 is further configured to transmit a fifth instruction to the cable integrated circuit module before transmitting a second instruction to the charger in a case that the electronic device successfully communicated with the cable integrated circuit module, where the fifth instruction is used for requesting cable information from the cable integrated circuit module. The transmission module is specifically configured to transmit a second command to the charger after the cable information transmitted by the cable integrated circuit module is successfully received.

In a possible implementation, the transmission module 71 is further configured to transmit a sixth instruction to the charger in a case that the electronic device fails to communicate with the cable integrated circuit module, where the sixth instruction is used for indicating that the electronic device fails to communicate with the cable integrated circuit module, and the sixth instruction is further used for instructing the charger to restore the transmission function of the Tx port of the charger and communicate with the cable integrated circuit module. The charging control apparatus provided in the embodiments of this application further includes a receiving module, configured to receive cable information transmitted by the charger, where the cable information is the cable information from the cable integrated circuit module obtained by the charger during communication with the cable integrated circuit module.

The charging control apparatus provided in the embodiments of this application can implement the processes of the foregoing method embodiments, and can achieve the same technical effects, which will not be described in detail herein to avoid repetition.

In the charging control apparatus provided in the embodiments of this application, since the communication ports of the cable integrated circuit module may be all configured to be in an Rx mode in advance, that is, the configuration mode of the communication ports of the cable integrated circuit module is unified (i.e., D+/D- of the cable integrated circuit module are all in an Rx mode), different electronic devices may share the same communication connection mode for charging during fast charging, improving the flexibility in fast charging of different electronic devices. Moreover, in the configuration mode of this solution, the electronic device may instruct the charger to disable the transmission function of a Tx port of the charger, so that the electronic device may communicate with the cable integrated circuit module, and thus obtain subsequent cable information for charging from the cable integrated circuit module. After the electronic device successfully communicated with the cable integrated circuit module, the electronic device may indicate the charger that the electronic device has successfully communicated with the cable integrated circuit module, so that the electronic device may request the charger for charging through the cable integrated circuit module. Therefore, the electronic device requests the charger to output corresponding current/voltage through the cable integrated circuit module based on the cable information, thereby achieving charging for the electronic device while avoiding damage to the cable integrated circuit module caused by excessive current/voltage outputted by the charger, and ensuring the safety of the electronic device.

The charging control apparatus in the embodiments of this application may be an apparatus, or a component, integrated circuit, or chip in a terminal. The apparatus may be a mobile electronic device or a non-mobile electronic device. For example, the mobile electronic device may be a mobile phone, tablet computer, notebook computer, palm computer, in-vehicle electronic device, wearable device, ultra-mobile personal computer (ultra-mobile personal computer, UMPC), netbook, personal digital assistant (personal digital assistant, PDA), or the like; and the non-mobile electronic device may be a server, network attached storage (Network Attached Storage, NAS), personal computer (personal computer, PC), television (television, TV), teller machine, self-service machine, or the like, which is not specifically limited in the embodiments of this application.

The charging control apparatus in the embodiments of this application may be an apparatus with an operating system. The operating system may be an Android (Android) operating system, an ios operating system, or other possible operating systems, which is not specifically limited in the embodiments of this application.

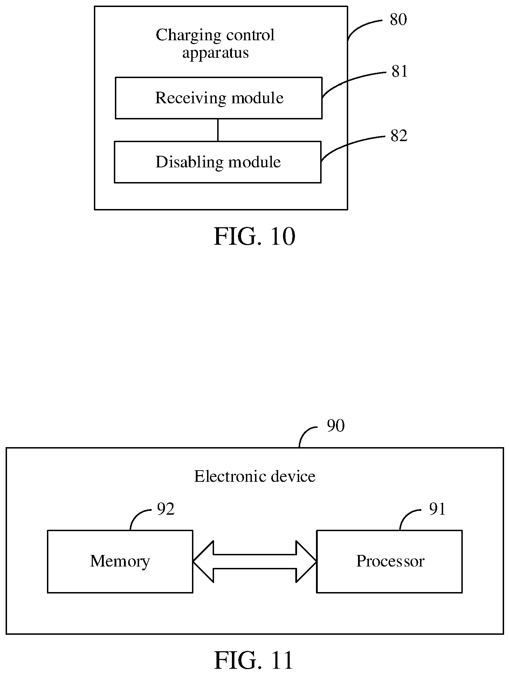

FIG. 10 shows a possible structural schematic diagram of the charging control apparatus involved in the embodiments of this application. The charging control apparatus is applied to a charger, where the charger, an electronic device, and a cable integrated circuit module are connected to each other. As shown in FIG. 10, the charging control apparatus 80 may include a receiving module 81 and a disabling module 82.

The receiving module 81 is configured to receive a first instruction transmitted by the electronic device in a case that communication ports of the cable integrated circuit module are all configured to be in an Rx mode, where the first instruction is used for indicating that the electronic device is about to communicate with the cable integrated circuit module. The disabling module 82 is configured to disable the transmission function of a Tx port of the charger based on the first instruction received by the receiving module 81.

In a possible implementation, the charging control apparatus 80 provided in the embodiments of this application further includes a restoring module, configured to restore the transmission function of the Tx port of the charger upon reception of the second instruction transmitted by the electronic device after the disabling module 82 disables the transmission function of the Tx port of the charger, where the second instruction is used for indicating that the electronic device has completed communication with the cable integrated circuit module.

In a possible implementation, the pin of the Tx port and the pin of the Rx port of the charger are set in a linkage mode. The charging control apparatus 80 provided in the embodiments of this application further includes an activating module and a restoring module. The disabling module is further configured to disable the reception function of the Rx port of the charger based on the first instruction after the transmission function of the Tx port of the charger is disabled. The activating module is configured to activate the timer function of the charger. The restoring module is configured to restore the transmission function of the Tx port and the reception function of the Rx port of the charger after the activating module activates the timer function for a first preset duration.

In a possible implementation, the charging control apparatus 80 provided in the embodiments of this application further includes a requesting module, configured to request communication with the cable integrated circuit module upon reception of the control instruction transmitted by the electronic device after the restoring module restores the transmission function of the Tx port and the reception function of the Rx port of the charger; or request communication with the cable integrated circuit module after a second preset duration in a case that it is detected that the charger still has not received the second instruction after the first preset duration.

In a possible implementation, the charging control apparatus 80 provided in the embodiments of this application further includes a transmission module, configured to transmit a third instruction to the electronic device in a case that the transmission function of the Tx port of the charger is restored after the disabling module disables the transmission function of the Tx port of the charger, where the third instruction is used for indicating that the charger is about to communicate with the cable integrated circuit module, and the third instruction is further used for instructing the electronic device to disable the transmission function of the Tx port of the electronic device; and transmit a fourth instruction to the electronic device, where the fourth instruction is used for indicating that the charger has completed communication with the cable integrated circuit module, and the fourth instruction is further used for instructing the electronic device to restore the transmission function of the Tx port of the electronic device.

The charging control apparatus provided in the embodiments of this application can implement the processes of the foregoing method embodiments, and can achieve the same technical effects, which will not be described in detail herein to avoid repetition.

In the charging control apparatus provided in the embodiments of this application, since the communication ports of the cable integrated circuit module may be all configured to be in an Rx mode in advance, that is, the configuration mode of the communication ports of the cable integrated circuit module is unified (i.e., D+/D- of the cable integrated circuit module are all in an Rx mode), different electronic devices may share the same communication connection mode for charging during fast charging, improving the flexibility in fast charging of different electronic devices. Moreover, in the configuration mode of this solution, the charger may disable the transmission function of the Tx port of the charger based on the instruction of the electronic device, so that the electronic device may communicate with the cable integrated circuit module, and thus obtain subsequent cable information for charging from the cable integrated circuit module.

Optionally, as shown in FIG. 11, the embodiments of this application further provide an electronic device or charger (schematically an electronic device 90 in FIG. 11), including a processor 91, a memory 92, and a program or an instruction stored in the memory 92 and executable on the processor 91, where when the computer program or the instruction is executed by the processor 91, the processes of the foregoing method embodiments are implemented, and the same technical effects are achieved, which will not be described in detail herein to avoid repetition.

The electronic device in the embodiments of this application includes the foregoing mobile electronic device and a non-mobile electronic device.

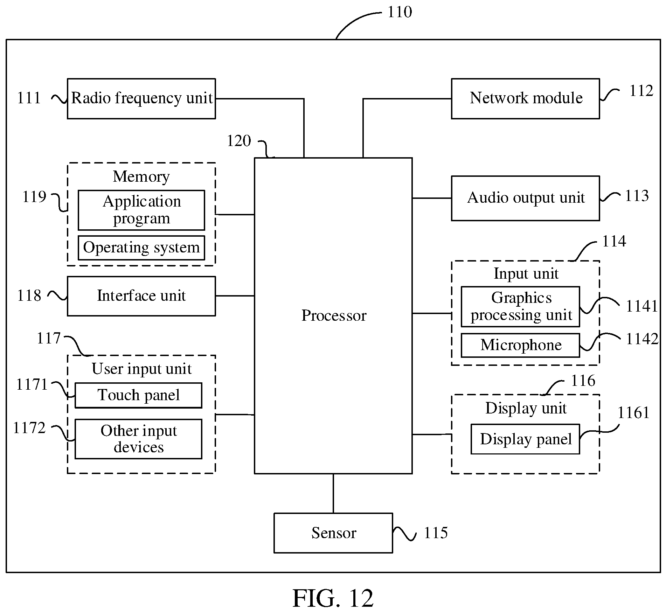

FIG. 12 is a schematic structural diagram of hardware of an electronic device for implementing the embodiments of this application.

The electronic device 110 includes, but not limited to a radio frequency unit 111, a network module 112, an audio output unit 113, an input unit 114, a sensor 115, a display unit 116, a user input unit 117, an interface unit 118, a memory 119, a processor 120, and other components.

A person skilled in the art may understand that, the electronic device 110 may further include a power supply (such as a battery) for supplying power to the components. The power supply may be logically connected to the processor 120 through a power management system, thereby implementing functions such as charging, discharging, and power consumption management by the power management system. The structure of the electronic device shown in FIG. 12 constitutes no limitation on the electronic device, and the electronic device may include more or fewer components than those illustrated in the figure, or combine some components, or have a different deployment of components, which will not be described in detail herein.

In the embodiments of this application, the electronic device, the cable integrated circuit module and the charger are connected to each other.

The radio frequency unit 111 is configured to transmit a first instruction to the charger in a case that communication ports of the cable integrated circuit module are all configured to be in an Rx mode, where the first instruction is used for indicating that the electronic device is about to communicate with the cable integrated circuit module, and the first instruction is further used for instructing the charger to disable the transmission function of a Tx port of the charger; and transmit a second instruction to the charger in a case that the electronic device successfully communicated with the cable integrated circuit module, where the second instruction is used for indicating that the electronic device has completed communication with the cable integrated circuit module.

In the electronic device provided in the embodiments of this application, since the communication ports of the cable integrated circuit module may be all configured to be in an Rx mode in advance, that is, the configuration mode of the communication ports of the cable integrated circuit module is unified (i.e., D+/D- of the cable integrated circuit module are all in an Rx mode), different electronic devices may share the same communication connection mode for charging during fast charging, improving the flexibility in fast charging of different electronic devices. Moreover, in the configuration mode of this solution, the electronic device may instruct the charger to disable the transmission function of a Tx port of the charger, so that the electronic device may communicate with the cable integrated circuit module, and thus obtain subsequent cable information for charging from the cable integrated circuit module. After the electronic device successfully communicated with the cable integrated circuit module, the electronic device may indicate the charger that the electronic device has successfully communicated with the cable integrated circuit module, so that the electronic device may request the charger for charging through the cable integrated circuit module. Therefore, the electronic device requests the charger to output corresponding current/voltage through the cable integrated circuit module based on the cable information, thereby achieving charging for the electronic device while avoiding damage to the cable integrated circuit module caused by excessive current/voltage outputted by the charger, and ensuring the safety of the electronic device.

Optionally, in the embodiments of this application, the radio frequency unit 111 is further configured to transmit a control instruction to the charger after a second preset duration in a case that it is detected that the charger still has not received the second instruction after the first preset duration after the second instruction is transmitted to the charger, where the control instruction is used for instructing the charger to communicate with the cable integrated circuit module.

Optionally, in the embodiments of this application, the radio frequency unit 111 is further configured to receive a third instruction transmitted by the charger after the second instruction is transmitted to the charger, where the third instruction is used for indicating that the charger is about to communicate with the cable integrated circuit module. The processor 120 is configured to disable the transmission function of the Tx port of the electronic device based on the third instruction. The processor 120 is further configured to restore the transmission function of the Tx port of the electronic device upon reception of a fourth instruction transmitted by the charger, where the fourth instruction is used for indicating that the charger has completed communication with the cable integrated circuit module.

Optionally, in the embodiments of this application, the radio frequency unit 111 is further configured to transmit a fifth instruction to the cable integrated circuit module before transmitting a second instruction to the charger in a case that the electronic device successfully communicated with the cable integrated circuit module, where the fifth instruction is used for requesting cable information from the cable integrated circuit module. The radio frequency unit 111 is specifically configured to transmit a second command to the charger after the cable information transmitted by the cable integrated circuit module is successfully received.

Optionally, in the embodiments of this application, the radio frequency unit 111 is further configured to transmit a sixth instruction to the charger in a case that the electronic device fails to communicate with the cable integrated circuit module, where the sixth instruction is used for indicating that the electronic device fails to communicate with the cable integrated circuit module, and the sixth instruction is further used for instructing the charger to restore the transmission function of the Tx port of the charger and communicate with the cable integrated circuit module; and receive cable information transmitted by the charger, where the cable information is the cable information from the cable integrated circuit module obtained by the charger during communication with the cable integrated circuit module.

The electronic device provided in the embodiments of this application can implement the processes of the foregoing method embodiments, and can achieve the same technical effects, which will not be described in detail herein to avoid repetition.

A reference may be made to the beneficial effects of the corresponding implementations in the foregoing method embodiments for the beneficial effects of various implementations in the embodiments, which will not be described in detail herein to avoid repetition.

It is to be understood that, in the embodiments of this application, the input unit 114 may include a graphics processing unit (Graphics Processing Unit, GPU) 1141 and a microphone 1142, where the GPU 1141 processes image data of a static picture or a video that is obtained by an image acquisition apparatus (e.g., a camera) in a video acquisition mode or an image acquisition mode. The display unit 116 may include a display panel 1161 that may be configured in the form of a liquid crystal display, an organic light-emitting diode, or the like. The user input unit 117 includes a touch panel 1171 and other input devices 1172. The touch panel 1171 is also known as a touch screen. The touch panel 1171 may include two parts, i.e., a touch detection apparatus and a touch controller. The other input devices 1172 may include, but not limited to, a physical keyboard, a function key (such as a volume control key and a switch key), a track ball, a mouse, and a joystick, which will not be described in detail herein. The memory 119 is configured to store a software program and various data, including, but not limited to, an application program and an operating system. The processor 120 may integrate an application processor and a modem processor. The application processor mainly processes an operating system, a user interface, an application program, and the like. The modem processor mainly processes wireless communication. It may be understood that, alternatively, the modem processor may not be integrated in the processor 120.

The embodiments of this application further provide a readable storage medium, in which a program or an instruction is stored, where when the computer program or the instruction is executed by a processor, the processes of the foregoing method embodiments are implemented, and the same technical effects are achieved, which will not be described in detail herein to avoid repetition.

The processor is that in the electronic device as described in the foregoing embodiments. The readable storage medium includes a computer-readable storage medium, e.g., a computer read-only memory (Read-Only Memory, ROM), a random access memory (Random Access Memory, RAM), a magnetic disk, or an optical disk.

The embodiments of this application further provide a chip, including a processor and a communication interface, where the communication interface is coupled to the processor, and the processor is configured to run a program or instruction to implement the processes of the foregoing method embodiments, and can achieve the same technical effects, which will not be described in detail herein to avoid repetition.

It is to be understood that the chip mentioned in the embodiments of this application may also be called a system level chip, a system on a chip, a chip system, a system on a chip on chips, or the like.

The terms "include", "comprise", or any other variations thereof herein are intended to cover a non-exclusive inclusion, so that a process, method, object, or apparatus that includes a series of elements not only includes those elements, but also other elements that are not explicitly listed, or also include elements inherent in such a process, method, object, or apparatus. Without more limitations, elements defined by a sentence "including one..." does not exclude that there are other same elements in a process, method, object, or apparatus including the elements. In addition, the scope of the methods and apparatuses in the implementations of this application is not limited to performance of functions in the order shown or discussed, but may further include performance of functions in a substantially simultaneous manner or in a reverse order according to the functions involved. For example, the described methods may be performed in a different order than described, and the steps may be supplemented, omitted, or combined. In addition, features described in some examples may be combined in other examples.

According to the descriptions in the foregoing implementations, a person skilled in the art may clearly learn that the methods according to the foregoing embodiments may be implemented in the form of software combined with a necessary general-purpose hardware platform, or by hardware, with the former being the better implementation in many cases. Based on such an understanding, the technical solutions of this application essentially, or the part thereof contributing to the related art, may be implemented in the form of a software product. The computer software product is stored in a storage medium (e.g., an ROM/RAM, a magnetic disk, or an optical disk), and includes multiple instructions to enable a terminal (e.g., a mobile phone, a computer, a server, an air conditioner, a network device, or the like) to perform the methods according to the embodiments of this application.

The embodiments of this application are described above with reference to the accompanying drawings, but this application is not limited to the foregoing specific implementations, which are merely exemplary but not restrictive. Those of ordinary skill in the art may make various variations under the teaching of this application without departing from the spirit of this application and the protection scope of the claims, and such variations shall all fall within the protection scope of this application.

## Claims

1. A charging control method, applied to an electronic device, the electronic device, a cable integrated circuit module, and a charger being connected to each other, and the method comprising:
transmitting a first instruction to the charger in a case that communication ports of the cable integrated circuit module are all configured to be in a receive Rx mode, wherein the first instruction is used for indicating that the electronic device is about to communicate with the cable integrated circuit module, and the first instruction is further used for instructing the charger to disable a transmission function of a transmit Tx port of the charger; and
transmitting a second instruction to the charger in a case that the electronic device successfully communicated with the cable integrated circuit module, wherein the second instruction is used for indicating that the electronic device has completed communication with the cable integrated circuit module.

2. The method according to claim 1, wherein the charger restores the transmission function of the Tx port of the charger in a case that the charger receives the second instruction transmitted by the electronic device.

3. The method according to claim 1, wherein a pin of the Tx port and a pin of an Rx port of the charger are set in a linkage mode, and the first instruction is further used for instructing the charger to disable a reception function of the Rx port of the charger and activating a timer function of the charger.

4. The method according to claim 3, wherein the charger restores the transmission function of the Tx port and the reception function of the Rx port of the charger after the timer function is activated for a first preset duration.

5. The method according to claim 4, wherein after the transmitting a second instruction to the charger, the method further comprises:
in a case that it is detected that the charger still has not received the second instruction after the first preset duration, transmitting a control instruction to the charger after a second preset duration, wherein the control instruction is used for instructing the charger to communicate with the cable integrated circuit module.

6. The method according to any one of claims 1 to 5, wherein after the transmitting a second instruction to the charger, the method further comprises:
receiving a third instruction transmitted by the charger, wherein the third instruction is used for indicating that the charger is about to communicate with the cable integrated circuit module;
disabling the transmission function of the Tx port of the electronic device based on the third instruction; and
restoring the transmission function of the Tx port of the electronic device upon reception of a fourth instruction transmitted by the charger, wherein the fourth instruction is used for indicating that the charger has completed communication with the cable integrated circuit module.

7. A charging control method, applied to a charger, the charger, an electronic device, and a cable integrated circuit module being connected to each other, and the method comprising:
receiving a first instruction transmitted by the electronic device in a case that communication ports of the cable integrated circuit module are all configured to be in an Rx mode, wherein the first instruction is used for indicating that the electronic device is about to communicate with the cable integrated circuit module; and
disabling a transmission function of a Tx port of the charger based on the first instruction.

8. The method according to claim 7, wherein after the disabling a transmission function of a Tx port of the charger, the method further comprises:
restoring the transmission function of the Tx port of the charger upon reception of a second instruction transmitted by the electronic device, wherein the second instruction is used for indicating that the electronic device has completed communication with the cable integrated circuit module.

9. The method according to claim 7, wherein a pin of the Tx port and a pin of an Rx port of the charger are set in a linkage mode; and after the disabling a transmission function of a Tx port of the charger, the method further comprises:
disabling a reception function of the Rx port of the charger based on the first instruction, and activating a timer function of the charger; and
restoring the transmission function of the Tx port and the reception function of the Rx port of the charger after the timer function is activated for a first preset duration.

10. The method according to claim 9, wherein after the restoring the transmission function of the Tx port and the reception function of the Rx port of the charger, the method further comprises:
requesting communication with the cable integrated circuit module upon reception of the control instruction transmitted by the electronic device; or,
requesting communication with the cable integrated circuit module after a second preset duration, in a case that it is detected that the charger still has not received a second instruction transmitted by the electronic device after the first preset duration.

11. The method according to any one of claims 7 to 10, wherein after the disabling a transmission function of a Tx port of the charger, the method further comprises:
transmitting a third instruction to the electronic device in a case that the transmission function of the Tx port of the charger is restored, wherein the third instruction is used for indicating that the charger is about to communicate with the cable integrated circuit module, and the third instruction is further used for instructing the electronic device to disable the transmission function of the Tx port of the electronic device; and
transmitting a fourth instruction to the electronic device, wherein the fourth instruction is used for indicating that the charger has completed communication with the cable integrated circuit module, and the fourth instruction is further used for instructing the electronic device to restore the transmission function of the Tx port of the electronic device.

12. A charging control apparatus, applied to an electronic device, wherein the electronic device, a cable integrated circuit module, and a charger are connected to each other; and the charging control apparatus comprises a transmission module configured to:
transmit a first instruction to the charger in a case that communication ports of the cable integrated circuit module are all configured to be in an Rx mode, wherein the first instruction is used for indicating that the electronic device is about to communicate with the cable integrated circuit module, and the first instruction is further used for instructing the charger to disable a transmission function of a Tx port of the charger; and
transmit a second instruction to the charger in a case that the electronic device successfully communicated with the cable integrated circuit module, wherein the second instruction is used for indicating that the electronic device has completed communication with the cable integrated circuit module.

13. The apparatus according to claim 12, wherein a pin of the Tx port and a pin of an Rx port of the charger are set in a linkage mode, and the first instruction is further used for instructing the charger to disable a reception function of the Rx port of the charger and activating a timer function of the charger.

14. The apparatus according to claim 13, wherein the charger restores the transmission function of the Tx port and the reception function of the Rx port of the charger after the timer function is activated for a first preset duration.

15. The apparatus according to claim 14, wherein the transmission module is further configured to transmit, after transmitting the second instruction to the charger and if detecting that the charger still has not received the second instruction after the first preset duration, a control instruction to the charger after a second preset duration, wherein the control instruction is used for instructing the charger to communicate with the cable integrated circuit module.

16. A charging control apparatus, applied to a charger, wherein the charger, an electronic device, and a cable integrated circuit module are connected to each other, and the charging control apparatus comprises a receiving module and a disabling module;
the receiving module is configured to receive a first instruction transmitted by the electronic device in a case that communication ports of the cable integrated circuit module are all configured to be in an Rx mode, the first instruction is used for indicating that the electronic device is about to communicate with the cable integrated circuit module; and
the disabling module is configured to disable a transmission function of a Tx port of the charger based on the first instruction received by the receiving module.

17. The apparatus according to claim 16, wherein a pin of the Tx port and a pin of an Rx port of the charger are set in a linkage mode; and the charging control apparatus further comprises an activating module and a restoring module;
the disabling module is further configured to disable a reception function of the Rx port of the charger based on the first instruction after the transmission function of the Tx port of the charger is disabled;
the activating module is configured to activate a timer function of the charger; and
the restoring module is configured to restore the transmission function of the Tx port and the reception function of the Rx port of the charger after the activating module activates the timer function for a first preset duration.

18. The apparatus according to claim 17, wherein the charging control apparatus further comprises a requesting module configured to:
request, after the restoring module restores the transmission function of the Tx port and the reception function of the Rx port of the charger, communication with the cable integrated circuit module upon reception of the control instruction transmitted by the electronic device; or
request, in a case that it is detected that the charger still has not received a second instruction transmitted by the electronic device after the first preset duration, communication with the cable integrated circuit module after a second preset duration.

19. An electronic device, comprising a processor, a memory, and a program or an instruction stored in the memory and executable on the processor, when the program or the instruction is executed by the processor, the steps of the charging control method according to any one of claims 1 to 6 are implemented.

20. A charger, comprising a processor, a memory, and a program or an instruction stored in the memory and executable on the processor, when the program or the instruction is executed by the processor, the steps of the charging control method according to any one of claims 7 to 11 are implemented.

21. A readable storage medium storing a program or an instruction, wherein when the program or the instruction is executed by a processor, the steps of the charging control method according to any one of claims 1 to 6, or the steps of the charging control method according to any one of claims 7 to 11 are implemented.

22. A charging control apparatus, configured to implement the charging control method according to any one of claims 1 to 6, or implement the charging control method according to any one of claims 7 to 11.

23. A chip, comprising a processor and a communication interface, the communication interface being coupled to the processor, and the processor being configured to run a program or an instruction to implement the charging control method according to any one of claims 1 to 6, or implement the charging control method according to any one of claims 7 to 11.
